# FASCICULE DE BREVET EUROPEEN

(11) **EP 0 710 635 B1**
(45) Date de publication et mention de la délivrance du brevet: **19.08.1998**
(21) Numéro de dépôt: 95450015.3
(22) Date de dépôt: 31.10.1995
(51) Int. Cl.: C04B 35/593, C04B 35/597

(54) **Procédé d'obtention d'une matière céramique superplastique à base de nitrure de silicium, matières obtenues et application à la réalisation d'une pièce finie**
Verfahren zur Herstellung eines superplastischen keramischen Materials auf Siliciumnitridbasis, erhaltene Materialien und Verwendung bei der Herstellung eines fertigen Bauteils
Method of making a superplastic ceramic material based on silicon nitride, obtained materials and use for the production of a finished part

(30) Priorité: 04.11.1994 FR 9413496
(43) Date de publication de la demande: 08.05.1996
(73) Titulaire: AEROSPATIALE Société Nationale Industrielle, 75781 Paris Cédex 16 (FR)
(72) Inventeur: Rossignol, Fabrice, F-87000 Limoges (FR); Rouxel, Tanguy, F-87000 Limoges (FR); Besson, Jean-Louis, F-87000 Limoges (FR); Goursat, Paul, F-87430 Verneuil-sur-Vienne (FR); Lespade, Pierre, F-33700 Merignac (FR)
(74) Mandataire: Thébault, Jean-Louis

(56) Documents cités:
- US-A- 4 732 719
- T. ROUXEL ET AL.: "Superplastic deformation of a monolithic silicon nitride" 1995 , PLENUM PRESS , NEW YORK XP000579168 * page 351 - page 358; figure 5 * & INT. ENG. FOUND. CONF., Meeting date 1994

## Description

La présente invention a trait à une matière céramique superplastique à base de Si₃N₄ et plus précisément une céramique de type SiYAlION monolithique présentant une bonne superplasticité et une aptitude à une mise en forme dans des conditions compatibles avec les impératifs industriels tout en conservant de bonnes propriétés thermomécaniques après déformation.

Le phénomène de superplasticité consiste en l'aptitude des matériaux polycristallins à subir de très grandes déformations dans un domaine température-vitesse de déformation limité, sans rupture macroscopique. Le nitrure de silicium Si₃N₄ est une céramique thermomécanique des plus intéressantes dans de nombreuses applications du fait de ses bonnes propriétés intrinsèques, à savoir :
- dureté élevée,
- contrainte à rupture élevée à haute température,
- bonne ténacité,
- bonne résistance à l'oxydation.
Aussi, on peut envisager son intégration dans des systèmes soumis simultanément à des sollicitations de type thermiques et mécaniques.

Cependant, la mise en forme de composants en Si₃N₄ de forme complexe par usinage reste très délicate, longue et coûteuse.

La déformation superplastique est un phénomène connu depuis longtemps pour certains métaux et alliages mais la possibilité d'une telle superplasticité pour certains matériaux céramiques est apparue récemment. On sait, en effet, que des sollicitations en traction dans des matériaux céramiques conduisent à des concentrations de contrainte localisées aux joints de grains ainsi qu'aux points triples. Ces contraintes ont tendance à séparer les grains en créant des cavités qui peuvent croître jusqu'à générer des fractures intergranulaires généralisées.

Aussi, pour obtenir un effet de superplasticité, il faut supprimer la nucléation des cavités ou réduire leur cinétique de croissance.

Une solution consiste à diminuer de manière substantielle les vitesses de déformation, qui constituent le premier paramètre, mais ceci au préjudice des durées de fabrication, ce qui exclurait une utilisation industrielle.

Un autre paramètre est la température d'élaboration qui doit être limitée mais cependant suffisamment élevée pour permettre une meilleure homogénéisation de la répartition des composés (mécanisme de diffusion) et accommoder l'écoulement superplastique.

Afin de pouvoir déformer avec des vitesses suffisamment élevées et une température minimum, il est nécessaire de s'intéresser à la microstructure elle-même.

Les exigences microstructurales essentielles concernent la taille des grains qui doit être inférieure à 1 µm, la morphologie des grains qui doit être de préférence équiaxe, et la stabilité de la taille et de la forme des grains pendant le processus de déformation.

Un autre paramètre très important est la structure des joints de grains car la présence d'une phase vitreuse aux joints de grains favorise la superplasticité.

Des études en laboratoire ont été menées sur la superplasticité du nitrure de silicium Si₃N₄ (voir PLASTIC DEFORMATION OF CERAMICS (1995), Proc. Int. Eng. Found. Conf., Meeting date 7.-12.8.1994, pages 351-358; voir US-A-4732719). On connaît deux autres documents, le premier ayant une approche nanocomposites et l'autre, une approche monolithique.

Le premier document est la publication du "Journal of the American Ceramic Society" vol 75 N°9, Septembre 1992, pages 2363-2372, qui concerne une composition d'un mélange de Si₃N₄/SiC, propice à la déformation superplastique.

Des essais ont été conduits sur des compositions ayant 20 % à 30 % en poids de SiC dans une matrice de β- Si₃N₄.

La taille des grains doit impérativement être inférieure à 1 micromètre, ces grains étant noyés dans une phase amorphe qui conditionne les propriétés du matériau à haute température.

A cet effet, la poudre de Si₃N₄/SiC est synthétisée par une réaction en phase vapeur suivie d'un traitement à l'azote à 1350°C.

Des apports de Y₂O₃/Al₂O₃ sont effectués ensuite dans la composition puis le mélange est pressé à chaud entre 1650°C et 1800°C et sous une pression de 34 MPa. Ce document indique le taux de 2 % en poids d'alumine et de 6 % en poids d'oxyde d'Yttrium.

Il se forme une phase vitreuse de SiYAlON intergranulaire dans laquelle sont présents l'Yttrium et l'Aluminium.

Des essais ont été conduits en faisant varier la vitesse de déformation de 2. 10⁻⁵ à 8. 10⁻⁵ s⁻¹ et on a pu constater qu'il faut des faibles vitesses de 2. 10⁻⁵ s⁻¹ pour une température de 1600°C si l'on souhaite atteindre un taux de déformation de 114 %.

Les seuls résultats probants quant aux variations de températures montrent qu'il faut se situer à des températures élevées et d'au moins 1625°C pour obtenir des déformations de 63 à 67 % avec des vitesses de déformation de 4.10⁻⁵ s⁻¹.

On constate que les particules nanophasiques de SiC inhibent la croissance des grains, à condition que la taille des grains soit extrêmement réduite, comme cela est préalablement exprimé.

Le phénomène qui régit les déplacements fait plutôt appel au mécanisme de la diffusion, ce qui engendre des vitesses de déformation lentes et des températures de travail élevées, alors que l'industrie recherche, ainsi que cela a été expliqué en préambule, des vitesses rapides et des températures limitées.

Par ailleurs, la méthode de mise en oeuvre du mélange Si₃N₄/SiC est délicate car il faut une dispersion très homogène. Celle-ci n'est obtenue que par mise en oeuvre de produits de base très élaborés si bien qu'une telle méthode n'est pas, à ce jour, transposable immédiatement au milieu industriel. De plus, les coûts de production seraient très élevés.

D'un autre côté, on sait que l'évolution de la phase intergranulaire joue un rôle prépondérant dans la superplasticité car cette phase détermine les capacités des grains à se déplacer les uns par rapport aux autres.

Aussi, la publication du "Department of materials and Engineering of Michigan" dans le "Journal of the American Ceramic Society" vol 75 N°10, Octobre 1992, pages 2733-2741, mentionne une étude sur cette phase intergranulaire.

Il peut, en effet, apparaître intéressant d'augmenter les propriétés de superplasticité en ajoutant une forte quantité d'ajouts de frittage car ces éléments se trouvant aux joints de grains lors de la fusion, cela permet le déplacement plus aisé des grains les uns par rapport aux autres dans la phase liquide.

Dans ce cas, on recherche une mobilité d'ordre mécanique sous forme d'un écoulement de type Newtonien, les grains étant considérés comme des inclusions rigides qui se déplacent dans la phase liquide, les grains restant en perpétuelle interaction.

Des déformations élevées ont été obtenues avec des compositions exprimées en poids de : 52,6 % de Si₃N₄, 17,3 % d'AlN, 26,3 % d' Al₂O₃ et 3,8 % d'Y₂O₃.

Les résultats de déformation sont très étonnants pour des matériaux céramiques puisque l'allongement atteint 230 % pour une vitesse de traction de 0,0014 mm/s ou une vitesse de déformation de 10⁻⁴ s⁻¹, à la température de 1550°C.

Ceci est non seulement dû à la possibilité pour les grains de se déplacer grâce la quantité et à la nature de la matière contenue dans les espaces intergranulaires mais aussi au fait qu'il se produit une croissance de la dimension des grains.

On sait également que la morphologie préférentielle d'un grain est la morphologie équiaxe qui favorise les glissements aux joints de grain.

Par contre, les propriétés thermomécaniques qui résultent de telles déformations sont très probablement limitées par le fait même des déformations subies mais surtout par la composition du matériau dans lequel on introduit un pourcentage très important d'ajouts, supérieur à 30 % en poids.

Aussi, la présente invention a pour objet une composition dont :
- la mise en oeuvre et l'obtention sont en parfaite adéquation avec les possibilités d'industrialisation actuelles,
- les capacités de déformation sont suffisantes pour les applications envisagées mais avec des qualités mécaniques, après déformation, suffisantes également pour ces applications, c'est à dire peu différentes des qualités intrinsèques de pièces obtenues par des procédés de mise en forme classiques,
- les capacités réfractaires à chaud sont conservées,
- le prix de revient est compatible avec les pratiques industrielles.
- de tels matériaux permettent la réalisation par "forgeage", c'est à dire par déformation d'une préforme, d'une pièce aux cotes ou proches des cotes finales, ceci en supprimant tout usinage complexe.

A cet effet, la présente invention propose un procédé d'élaboration d'une matière céramique superplastique à base de nitrure de silicium, qui est spécifié dans la revendication 1.

Les ajouts de frittage sont l'Alumine Al₂O₃ et l'oxyde d'Yttrium Y₂O₃.

L'Alumine est introduite dans le mélange avec une teneur comprise entre 4 et moins de 8 % et l'oxyde d'Yttrium avec une teneur comprise entre 2 et 4 %, le total devant rester inférieur à 10 % en poids.

Selon une autre caractéristique du procédé, le frittage est effectué à une température de l'ordre de 1550°C sous une pression de l'ordre de 35 MPa pendant environ 2 heures.

Pour réaliser un mélange intime du nitrure de silicium et des ajouts de frittage on les disperse dans de l'éthanol avec présence éventuelle d'un agent dispersant.

L'invention a également pour objet une matière céramique superplastique obtenue par ce procédé.

L'invention a aussi pour objet une matière céramique thermostructurale obtenue à partir de la matière céramique superplastique elle-même obtenue par le procédé selon l'invention et soumise à une température comprise entre 1550°C et 1600°C et à une déformation réalisée avec une vitesse de déformation comprise entre 10⁻⁵ et 10⁻⁴ s⁻¹.

L'invention propose également un procédé d'élaboration d'une pièce céramique finie, qui consiste :
- en une première étape, à mettre en oeuvre le procédé d'élaboration de matière céramique superplastique exposé ci-dessus, pour réaliser une préforme aux cotes et aux formes compatibles avec celles de la pièce finie, puis,
- en une seconde étape, à porter ou à maintenir ladite préforme dans une plage de température comprise entre 1550°C et 1600°C, et à la déformer à une vitesse de déformation comprise entre 10⁻⁵ et 10⁻⁴ s⁻¹, la préforme étant maintenue dans ladite plage de température, jusqu'à l'obtention de la pièce désirée.

Un autre objet de l'invention est la pièce finie en céramique thermostructurale obtenue par la mise en oeuvre du procédé d'élaboration ci-dessus.

Ainsi, le procédé et le matériau permettent de réaliser des pièces avec une approche technologique plus intéressante que dans les approches de l'art antérieur exposé ci-dessus. En effet, le matériau élaboré est plus facile et moins coûteux à préparer que le matériau obtenu à partir de nanocomposites et, par ailleurs, il contient beaucoup moins de phase vitreuse que le matériau monolithique de l'art antérieur comportant un taux d'ajouts supérieur à 30 % en poids, ce qui laisse présager des qualités thermomécaniques supérieures, c'est-à-dire proches des caractéristiques du matériau élaboré par des procédés classiques comme le pressage à chaud et/ou le pressage isostatique à chaud suivi d'un usinage.

A cet effet, la présente invention est décrite ci-après selon un mode de réalisation particulier, non limitatif, en regard des figures qui représentent :
- figure 1, une vue d'une courbe de température en fonction de la fraction massique de αSi₃N₄ qui délimite la transformation α en β,
- figure 2, une vue des résultats de traction et de compression d'échantillons,
- figure 3, une vue de courbes de déformation en traction obtenues, pour deux vitesses de déformation, à différentes températures, et
- figures 4A et 4B, deux vues schématiques de la pièce initiale et du résultat d'une déformation d'une pièce en matériau superplastique visant à réaliser une parabole.

### PREPARATION D'ECHANTILLONS

Dans ce but, on prépare un mélange de 6 % d'Al₂O₃ et 3 % d'Y₂O₃, le complément à 100 % étant de la poudre de Si₃N₄ (UBE SNE-10).

Le mélange est dispersé dans une solution d'éthanol avec des agents dispersants de la famille esterfluoroalkyle.

Après séchage, la poudre est mise en forme d'éprouvettes destinées à la flexion et à la traction, et frittée à chaud à basse température, de l'ordre de 1550°C, pendant environ 2 heures sous une pression de l'ordre de 35 MPa.

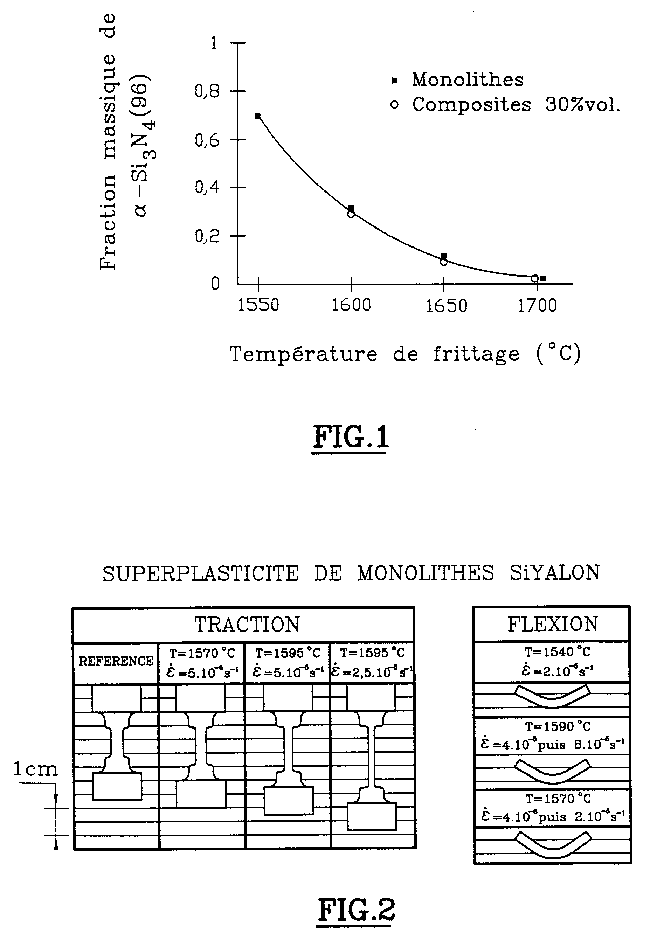

Dans de telles conditions, la transformation de la phase α, qui correspond à la structure du produit fritté avec grains équiaxes, en phase β, avec grains aciculaires, est limitée comme cela est montré sur la figure 1.

Il faut donc limiter la température de frittage, car la courbe de transformation montre bien la rapidité de variation du taux de phase α pour de faibles écarts de température.

On sait également que le grossissement des grains aciculaires β' SiAlON se produit essentiellement à partir de 1700°C.

Les résultats des essais obtenus en flexion trois points et en traction, à partir des éprouvettes ainsi fabriquées, sont récapitulés dans le tableau schématique de la figure 2.

Ce tableau montre trois essais en traction par rapport à un échantillon de référence :
- Le premier essai est réalisé à une température de 1570°C avec une vitesse de déformation ε de 5.10⁻⁵ s⁻¹, ce qui conduit à un allongement de 25 %.
- Le deuxième essai est réalisé à une température de 1595°C avec une vitesse de déformation ε de 5.10⁻⁵ s⁻¹ ce qui conduit à un allongement de 50 %.
- Le troisième essai est réalisé à une température de 1595°C avec une vitesse de déformation ε de 2,5.10⁻⁵ s⁻¹ ce qui conduit à un allongement de 90 %.

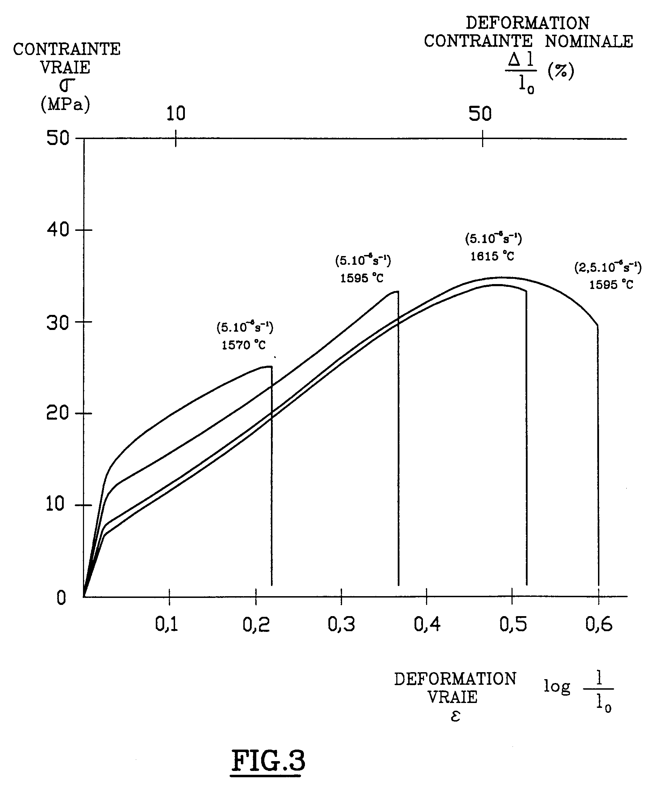

On peut également se reporter à la figure 3 qui montre les courbes de traction correspondantes de la déformation vraie en fonction de la contrainte vraie. On y retrouve les trois essais mentionnés ci-dessus et un essai supplémentaire à 1615°C qui conduit à un allongement de 65 %, pour une vitesse de déformation de 5.10⁻⁵ s⁻¹.

Le tableau de la figure 2 montre également trois essais de flexion :
- Le premier essai est réalisé à une température de 1540°C avec une vitesse de déformation ε de 2.10⁻⁵ s⁻¹,
- Le deuxième essai est réalisé à une température de 1590°C avec une vitesse de déformation ε de 4.10⁻⁵ s⁻¹, puis de 8.10⁻⁵ s⁻¹.
- Le troisième essai est réalisé à une température de 1570°C avec une vitesse de déformation ε de 4.10⁻⁵ s⁻¹ puis de 2.10⁻⁵ s⁻¹.

L'analyse micrographique montre une transformation de phase α en phase β' complète avec un développement des cristaux aciculaires de β' SiAlON.

La possibilité de déformation superplastique dans ce système est liée à la conjonction des trois phénomènes :
- dissolution des grains α, conduisant à la formation d'une phase liquide transitoire,
- précipitation des grains β' à partir de la phase liquide transitoire, et
- croissance des grains aciculaires β' à partir des nucléi formés et à partir des grains β' préexistants.

Ainsi le matériau obtenu selon la présente composition permet, par rapport à l'art antérieur, de réduire la quantité de la phase vitreuse intergranulaire puisque le pourcentage d'ajout est inférieur à 10 %, ce qui conduit à conserver des propriétés thermomécaniques intéressantes au matériau.

### ELABORATION D'UNE PIECE CERAMIQUE FINIE

On mélange intimement une poudre de Si₃N₄ avec des ajouts de frittage en quantité inférieure à 10 % en poids.

Afin d'obtenir un mélange intime, on disperse l'ensemble des poudres dans de l'éthanol en présence d'agents dispersants.

On fritte ensuite le mélange obtenu dans un moule à une température de l'ordre de 1550°C sous une pression de 35 MPa pendant 2 heures, pour élaborer une préforme en matière céramique selon l'invention.

Ensuite, on porte ou on maintient cette préforme à une température comprise entre 1550°C et 1600°C et on procède à sa déformation en vue de la réalisation de la pièce finale, à des vitesses de déformation comprises entre 10⁻⁵ et 10⁻⁴ s⁻¹.

Le produit ainsi fabriqué doit conserver des propriétés thermomécaniques intéressantes puisque la phase vitreuse intergranulaire est réduite en quantité du fait d'un pourcentage d'ajouts inférieur à 10 %.

De plus, le coût est réduit puisque les étapes de mise en oeuvre sont simples et accessibles à l'industrie.

On peut ainsi envisager de réaliser des plaques de matériau céramique à base de Si₃N₄ avec des cotes proches de celles de la pièce finale, qui sont ensuite cintrées pour réaliser, par exemple, des éléments de bords d'attaque d'engins volants à très grande vitesse ou des boucliers en forme, ainsi que toute autre pièce thermomécanique en forme pouvant entrer dans la structure d'un système fonctionnant à haute température :
- liaisons chaudes (visserie)
- pièces de moteurs (aube de turbine).

La déformation en température pour l'obtention de pièces finales peut être mise en oeuvre par des procédés connus de pressage à chaud multiaxial ou de pressage isostatique.

Les pièces sont ainsi obtenues en forme, proches des cotes finales.

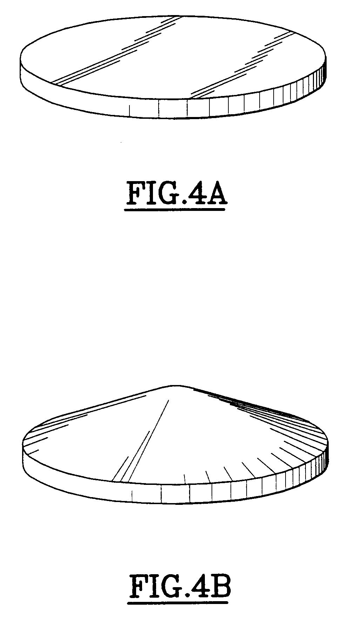

De plus, on peut obtenir des mises en forme très variées avec des niveaux de déformation importants. Ceci est notamment montré sur la figure 4A qui représente un disque d'épaisseur 3 mm et de diamètre 30 mm en matériau céramique de composition 6% Al₂O₃, 3%Y₂O₃, la répartition des phases α et β étant 70% et 30% respectivement.

On porte la pièce à 1595°C sous atmosphère d'azote et on déforme cette pièce à l'aide d'un outillage en graphite, avec une vitesse de déplacement de 0,1 mm/mn.

On obtient la pièce illustrée figure 4B qui a une forme parabolique avec un foyer de 7 mm.

A l'observation du résultat, on remarque la précision des formes et des dimensions après déformation et le très bon état de surface.

La durée de l'opération de déformation est courte et ne nécessite pas de reprise machine.

On peut ainsi réaliser par la mise en oeuvre du procédé des produits industriels, disponibles et commercialisables.

## Revendications

1. Procédé d'élaboration d'une matière céramique superplastique à base de nitrure de silicium, qui consiste à mélanger intimement du Si₃N₄ avec une taille de grains inférieure à 1 µm et une morphologie de préférence équiaxe avec des ajouts de frittage, à fritter le mélange, lesdits ajouts étant l'Alumine Al₂O₃ et l'oxyde d'Yttrium Y₂O₃, l'Alumine est introduite dans le mélange avec une teneur comprise entre 4 et moins de 8 % et l'oxyde d'Yttrium avec une teneur comprise entre 2 et 4 %, le total devant rester inférieur à 10 % en poids, en sorte de présenter une phase vitreuse aux joints de grains, en faible quantité.

2. Procédé d'élaboration selon la revendication 1, caractérisé en ce que l'on effectue le frittage à une température de 1550° C sous une pression de 35 MPa pendant 2 heures.

3. Procédé d'élaboration selon l'une quelconque des revendications 1 ou 2, caractérisé en ce que pour réaliser un mélange intime du nitrure de silicium et des ajouts de frittage on les disperse dans de l'éthanol.

4. Procédé d'élaboration selon la revendication 3, caractérisé en ce que l'on additionne à l'éthanol un agent dispersant.

5. Matière céramique superplastique obtenue par le procédé selon l'une quelconque des revendications 1 à 4.

6. Matière céramique thermostructurale obtenue à partir de la matière céramique superplastique de la revendication 5, soumise à une température comprise entre 1550°C et 1600°C et à une déformation réalisée avec une vitesse de déformation comprise entre 10⁻⁵ et 10⁻⁴ s⁻¹.

7. Procédé d'élaboration d'une pièce céramique finie, caractérisé en ce qu'il consiste :
- en une première étape, à mettre en oeuvre le procédé selon l'une quelconque des revendications 1 à 4 pour réaliser une préforme aux cotes et aux formes compatibles avec celles de la pièce finie, puis
- en une seconde étape, à porter ou maintenir ladite préforme dans une plage de températures comprises entre 1550°C et 1600°C, et à la déformer à une vitesse de déformation comprise entre 10⁻⁵ et 10⁻⁴ s⁻¹, la préforme étant maintenue dans ladite plage de températures, jusqu'à l'obtention de la pièce finie.

8. Pièce finie en céramique thermostructurale, caractérisée en ce qu'elle est obtenue par la mise en oeuvre du procédé de la revendication 7.

## Claims

1. Method of producing a superplastic ceramic material based on silicon nitride, which consists of intimately mixing Si₃N₄ with a grain size of less than 1 µm and a preferable equiaxial morphololgy with sintering additions, sintering the mixture, the said additions being alumina Al₂O₃ and yttrium oxide Y₂O₃, the alumina is introduced into the mixture in a proportion lying between 4 and less than 8% and the yttrium oxide in a proportion lying between 2 and 4%, the total necessarily remaining below 10% by weight, so as to exhibit a vitreous phase at the grain junctions, in a low quantity.

2. Production method according to Claim 1, characterised in that the sintering is carried out at a temperature of 1550°C and at a pressure of 35 MPa for 2 hours.

3. Production method according to either one of Claims 1 or 2, characterised in that, in order to produce an intimate mixture of the silicon nitride and the sintering additions, they are dispersed in ethanol.

4. Production method according to Claim 3, characterised in that a dispersant is added to the ethanol.

5. Superplastic ceramic material obtained by the method according to any one of Claims 1 to 4.

6. Thermostructural ceramic material obtained from the superplastic ceramic material of Claim 5, subjected to a temperature of between 1550°C and 1600°C and to a deformation produced with a deformation rate lying between 10⁻⁵ and 10⁻⁴ s⁻¹.

7. Method of producing a finished ceramic part, characterised in that it consists:
- in a first step, of implementing the method according to any one of Claims 1 to 4 for producing a preform with dimensions and shapes compatible with those of the finished part, and then
- in a second step, raising or keeping the said preform to or within a range of temperatures lying between 1550°C and 1600°C, and deforming it at a deformation rate lying between 10⁻⁵ and 10⁻⁴ s⁻¹, the preform being maintained in the said temperature range, until the finished part is obtained.

8. Finished part made of thermostructural ceramic, characterised in that it is obtained by implementing the method of Claim 7.

## Patentansprüche

1. Verfahren zur Herstellung eines superplastischen keramischen Materials auf Siliciumnitridbasis, das darin besteht Si₃N₄ mit einer Korngröße unterhalb von 1µm und einer bevorzugt gleichgerichteten Morphologie mit Sinterzusätzen innig zu mischen und die Mischung gesintert wird, wobei die Zusätze Aluminiumoxid Al₂O₃ und Yttriumoxid Y₂O₃ sind, wobei das Aluminiumoxid in die Mischung in einem Gehalt zwischen 4 und weniger als 8% und Yttriumoxid mit einem Gehalt zwischen 2 und 4% eingeführt wird, wobei die Zusätze insgesamt unterhalb von 10 Gew.% bleiben müssen, damit eine glasartige Phase an den Korngrenzen in geringer Menge erscheint.

2. Herstellungsverfahren nach Anspruch 1, dadurch gekennzeichnet, daß man das Sintern bei einer Temperatur von 1550°C unter einem Druck von 35 MPa während 2h durchführt.

3. Herstellungsverfahren nach einem der Ansprüche 1 oder 2, dadurch gekennzeichnet, daß man zur Herstellung einer innigen Mischung des Siliciumnitrids und Sinterzusätzen diese in Ethanol dispergiert.

4. Herstellungsverfahren nach Anspruch 3, dadurch gekennzeichnet, daß man dem Ethanol ein Dispersionsmittel zusetzt.

5. Superplastisches keramisches Material, erhalten nach dem Verfahren gemäß einem der Ansprüche 1 bis 4.

6. Thermostrukturiertes keramisches Material, erhalten aus dem superplastischen keramischen Material nach Anspruch 5, das einer Temperatur zwischen 1550°C und 1600°C und einer Deformation unterworfen ist, die mit einer Deformationsgeschwindigkeit zwischen 10⁻⁵ und 10⁻⁴ s⁻¹ realisiert ist.

7. Verfahren zur Herstellung eines endgültigen Keramikteils, dadurch gekennzeichnet, daß es
- aus einem ersten Schritt, bei dem man das Verfahren gemäß einem der Ansprüche 1 bis 4 zur Herstellung eines Rohlings mit Maßen und Formen, die mit denjenigen des endgültigen Teils kompatibel sind, durchführt, und darauf folgend
- einem zweiten Schritt besteht, bei dem der Rohling in dem Temperaturbereich zwischen 1550°C und 1600°C gebracht oder in diesem gehalten und mit einer Deformationsgeschwindigkeit zwischen 10⁻⁴ und 10⁻⁴ s⁻¹ deformiert wird, wobei der Rohling in dem genannten Temperaturbereich bis zum Erhalt des endgültigen Teils gehalten wird.

8. Endgültiges Teil aus thermostrukturiertem Keramikmaterial, dadurch gekennzeichnet, daß es durch Ausführung des Verfahrens nach Anspruch 7 erhalten wird.
